# EUROPÄISCHE PATENTANMELDUNG

(11) **EP 2 570 708 A2**
(43) Veröffentlichungstag der Anmeldung: **20.03.2013**
(21) Anmeldenummer: 12181471.9
(22) Anmeldetag: 23.08.2012
(51) Int. Cl.: F16L 5/04

(54) **Brandschutzmanschette, Verwendung dieser Brandschutzmanschette, Verfahren zum Anbringen einer Brandschutzmanschette und Deckendurchführung**

(30) Priorität: 16.09.2011 DE 102011082833
(71) Anmelder: HILTI Aktiengesellschaft, 9494 Schaan (LI)
(72) Erfinder: Simon, Sebastian, 86899 Landsberg (DE); Paetow, Mario, 86859 Igling (DE); Förg, Christian, 86862 Dillishausen (DE)

(57) **Zusammenfassung**

Brandschutzmanschette (6), die Brandschutzadditive umfasst und als rechteckiger Streifen ausgeführt ist. Dieser weist entlang nur einer Längsseite (18) eine Vielzahl von Einschnitten (22) auf, sodass benachbarte Laschen (14) gebildet werden.

## Beschreibung

Die Erfindung betrifft eine Brandschutzmanschette sowie die Verwendung einer solchen Brandschutzmanschette. Außerdem betrifft die Erfindung ein Verfahren zum Anbringen einer Brandschutzmanschette und eine Deckendurchführung.

Brandsichere Abschottungen von Deckendurchbrüchen werden wegen des geringeren Arbeitsaufwandes und der besseren Erreichbarkeit bevorzugt von oben her installiert. In den meisten Fällen werden zu diesem Zweck Schalungen eingesetzt, welche, sofern möglich, ebenfalls von oben installiert werden. Ist diese Möglichkeit nicht gegeben, so werden z.B. klassische Holzschalungen verwendet, die von der Unterseite des Deckendurchbruchs her angebracht werden müssen. Für eine Installation von oben eignen sich insbesondere verlorene Schalungen, die nach Verschluss des Durchbruchs in diesem verbleiben. Zu diesem Zweck kann z.B. Mineralwolle oder Bauschaum verwendet werden.

Zur brandtechnischen Absicherung von Installationen aus nicht brandresistenten Materialien, die durch den Deckendurchbruch geführt sind, muss mit Materialien gearbeitet werden, die im Brandfall den Deckendruchbruch verschließen. Dies kann durch den Einsatz von bestimmten Brandschutzadditiven erreicht werden, etwa solchen die unter Einwirkung von Hitze, wie bei einem Brand, eine Intumeszenz hervorrufen. Unter Verwendung von Mineralwolle hergestellte verlorene Schalungen weisen jedoch aufgrund der Dämmeigenschaften der Mineralwolle den Nachteil auf, dass sie auch das hinter der Mineralwolle liegende intumeszierende Material gegenüber der Hitze des Brandes isolieren. So kann dieses lediglich verzögert reagieren. Eine brennbare verlorene Schalung, z.B. aus Bauschaum, wäre geeigneter, erfordert jedoch einen gewissen Montageraum in dem Deckendurchbruch, sodass das die Brandschutzadditive enthaltenden Materialien sehr weit und somit möglicherweise nicht stabil in der Öffnung sitzen.

Aufgabe der vorliegenden Erfindung ist es, eine verbesserte Brandschutzmanschette und Deckendurchführung sowie ein verbessertes Verfahren zum Anbringen einer Brandschutzmanschette anzugeben, wobei die im Stand der Technik bekannten Nachteile überwunden werden sollen.

Gemäß einer ersten Ausführungsform wird eine Brandschutzmanschette angegeben, die Brandschutzadditive umfasst und als rechteckiger Streifen ausgeführt ist. Dieser rechteckige Streifen kann entlang nur einer seiner Längsseiten mit einer Vielzahl von Einschnitten versehen sein, sodass benachbarte Laschen gebildet werden. Vorteilhaft können die Einschnitte quer zu einer Längserstreckungsrichtung des rechteckigen Streifens ausgeführt werden. So entstehen quer zu der Längserstreckungsrichtung orientierte und in dieser Richtung benachbarte Laschen.

Vorteilhaft kann eine solche Brandschutzmanschette um eine durch einen Deckendurchbruch geführte Installation, z.B. um ein Kunststoffrohr oder um einen Kabelkanal, gelegt werden. Die an einer ihrer Längsseiten vorhandenen Laschen können quer zur Erstreckungsrichtung der Installation abgebogen werden. Wird eine so vorbereitete Brandschutzmanschette nun in den Ringspalt zwischen der Installation und dem Deckendurchbruch eingeführt, so werden die Laschen auf die Brandschutzmanschette zurückgebogen, und es entsteht eine Tasche, welche den Ringspalt an seiner Unterseite abdichtet. Vorteilhaft kann diese Tasche als verlorene Schalung für ein in den Ringspalt einzufüllendes Dichtmaterial dienen. Bevorzugt werden selbstnivellierende Dichtmassen als Dichtstoffe für die Deckenabschottung verwendet. Vorteilhaft kann die Installation der Brandschutzmanschette ausschließlich von oben erfolgen. Dies bedeutet einen geringeren Montageaufwand. Außerdem wird das intumeszierende Material der Brandschutzmanschette im Bereich der an der Unterseite des Deckendurchbruchs durch die Laschen der Brandschutzmanschette gebildeten Tasche und somit in der Nähe des Eingangs des Deckendurchbruchs platziert, sodass dieses schnell reagieren kann. Die Brandschutzmanschette gemäß den genannten Merkmalen ist außerdem sehr flexibel. Sie kann an unterschiedliche Deckenstärken, Öffnungs- bzw. Durchbruchgrößen, Rohrgrößen, etc. angepasst werden.

Zweckmäßig besteht die Brandschutzmanschette zumindest teilweise aus einem Basismaterial, welches ein Matrixmaterial und darin eingebettete Brandschutzadditive umfasst. Das Matrixmaterial dient dabei als Bindemittel für die Brandschutzadditive. Als Matrixmaterial kann z.B. ein Polymer verwendet werden. Vorteilhaft beträgt der Anteil der Brandschutzadditive in dem Basismaterial 10 bis 90 Gew.-%, bevorzugt 50 bis 90 Gew.-%, bezogen auf das Basismaterial. Dementsprechend beträgt der Anteil des Matrixmaterials 90 bis 10 Gew.-%, bevorzugt 50 bis 10 Gew.-%, bezogen auf das Basismaterial. Dieses Verhältnis stellt die Brandschutzeigenschaft der Brandschutzmanschette sicher, indem eine ausreichend große Menge an Brandschutzadditiven bereitgestellt wird, die die zum Verschließen des Deckendurchbruchs ausreichende Intumeszenz hervorrufen. So kann die Brandschutzmanschette auf die jeweilige Anwendung abgestimmt werden. Die Brandschutzmanschette kann dabei vollständig aus dem Basismaterial bestehen. Das als Matrixmaterial verwendete Polymer ist vorzugsweise elastisch, wodurch der Brandschutzmanschette, auch ohne Verwendung eines Trägerbandes oder einer Einlage, die notwendigen mechanischen Eigenschaften verliehen werden können.

Bevorzugt werden als Brandschutzadditive solche eingesetzt, die durch die Bildung einer sich unter Hitzeeinwirkung bildenden, aufgeblähten, isolierenden Schicht aus schwerentflammbaren Material (intumeszierende Schicht), die die Deckendurchführung verschließt und dadurch den Übertritt von Flammen verhindert oder zumindest verzögert, wirken. Solche Systeme sind dem Fachmann bekannt und können erfindungsgemäß eingesetzt werden.

Für die Ausbildung einer intumeszierenden Schicht auf chemischem Weg sind allgemein drei Komponenten erforderlich, ein Kohlenstofflieferant, ein Dehydrierungskatalysator und ein Treibmittel. Bei Hitzeinwirkung erweicht das Bindemittel und die Brandschutzadditive werden freigesetzt. Durch thermische Zersetzung wird aus dem Dehydrierungskatalysator die Säure freigesetzt, die dem Kohlenstofflieferanten und/oder dem Bindemittel Wasser entziehen, was zu deren Verkohlung (Carbonisierung) und somit zur Bildung einer Kohlestruktur, der sogenannten Aschekruste führt. Gleichzeitig zersetzt sich das Treibmittel thermisch unter Bildung nicht-brennbarer Gase, die ein Aufschäumen des carbonisierten (verkohlten) Materials unter Bildung eines isolierenden Schaums bewirken. Da die im Brandfall durch das Bindemittel gebildete Aschekruste in der Regel zu instabil ist und abhängig von deren Dichte und Struktur etwa durch Luftströmungen verblasen werden kann, was sich negativ auf die isolierende Wirkung der Beschichtung auswirkt, wird zu den eben aufgeführten Komponenten bevorzugt eine Verbindung gegeben, die die durch das Bindemittel gebildete Aschekruste zu stabilisieren vermag oder selbst ein Gerüst bildet, wodurch die isolierende Wirkung der Beschichtung aufrechterhalten oder verstärkt wird.

Als Dehydrierungskatalysatoren bzw. Säurebildner kommen die in intumeszierenden Flammschutzmitteln üblicherweise verwendeten und dem Fachmann bekannten Verbindungen, in Betracht, wie ein Salz oder ein Ester einer anorganischen, nicht flüchtigen Säure, ausgewählt unter Schwefelsäure, Phosphorsäure oder Borsäure. Im wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphate sind dabei Verbindungen wie Umsetzungsprodukte aus Lamelite C (Melamin-Formaldehyd-Harz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroaniline-2-sulfonsäure und 4,4-Dinitrosulfanilamid und dergleichen. Als Borsäureverbindung kann Melaminborat beispielhaft erwähnt werden.

Als Kohlenstofflieferant kommen die in intumeszierenden Flammschutzmitteln üblicherweise verwendeten und dem Fachmann bekannten Verbindungen in Betracht, wie stärkeähnliche Verbindungen, z.B. Stärke und modifizierte Stärke, und/oder mehrwertige Alkohole (Polyole), wie Saccharide und Polysaccharide und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk.. Geeignete Polyole sind Polyole aus der Gruppe Zucker, Pentaerythrit, Dipentaerythrit, Polyvinylacetat, Polyvinylalkohol, Sorbitol, Ethylenoxid-Propylenoxid-Polyole. Bevorzugt werden Pentaerythrit, Dipentaerythrit oder Polyvinylacetat eingesetzt.

Es sei erwähnt, dass das Matrixmaterial im Brandfall selbst auch die Funktion eines Kohlenstofflieferanten haben kann.

Als Treibmittel kommen die üblicherweise in Flammschutzmitteln verwendeten und dem Fachmann bekannten Verbindungen in Betracht, wie Cyanursäure oder Isocyansäure und deren Derivate, Melamin und deren Derivate. Solche sind Cyanamid, Dicyanamid, Dicandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränkt, wie Melaminpolyphosphat, das sowohl als Säurebildner als auch als Treibmittel wirkt. Weitere Beispiele sind in der GB 2 007 689 A1, EP 139 401 A1 und US-3 969 291 A1 beschrieben.

Daneben können Verbindungen enthalten sein, die unter Hitze ohne die Einwirkung bzw. die Reaktion mit anderen Verbindungen von sich aus intumeszieren, wie Blähgraphit, Vermiculit (Blähglimmer) und dergleichen.

Als Aschekrustenstabilisatoren bzw. Gerüstbildner kommen die üblicherweise in Flammschutzmitteln verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von ≤50 µm, vorzugsweise von 0,5 bis 10 µm besitzt. Im Fall der Verwendung des teilchenförmigen Metalls in Form von Fasern, Fäden und/oder Whiskers ist eine Dicke von 0,5 bis 10 µm und eine Länge von 10 bis 50 µm bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisierer wie Melaminphosphat oder Melaminborat und ablative Verbindungen, also solche die sich endotherm Zerstzen, wie Kristallwasserhaltige Verbindungen, z.B. Aluminiumtrihydroxid, enthalten sein.

In einer weiteren vorteilhaften Ausführungsform der Erfindung umfasst die Brandschutzmanschette zusätzlich zu dem Basismaterial ein Trägerband. Dieses kann flexibel sein, sodass der Brandschutzmanschette durch dieses Trägerband nicht nur eine gewisse Festigkeit, sondern gleichzeitig auch eine gewisse Elastizität verliehen wird. Vorteilhaft ist die Größe des Trägerbandes deckungsgleich zu dem rechteckigen Streifen gewählt. Die Laschen einer solchen Brandschutzmanschette verspreizen sich in dem Deckendurchbruch, wenn die Brandschutzmanschette von oben in den Ringspalt eingefügt wird, und bilden zuverlässig eine Tasche aus. Zweckmäßig besteht die Brandschutzmanschette mit Trägerband zumindest zu 30 %, bevorzugt zu bis zu 75 % aus Basismaterial. So kann auch bei Verwendung eines Trägerbandes ein hinreichend großes Intumeszenzvolumen sichergestellt werden, die Deckendurchführung im Brandfall zu verschließen.

Bei einer weiteren Ausführungsform ist das Trägerband einseitig oder beidseitig mit Basismaterial beschichtet. Im letzten Fall ist das Trägerband also als Einlage in das Basismaterial eingebettet. Das vorteilhaft flexible Trägerband besteht z.B. aus einem Gewebe, Vlies und/oder einem Blech. Auch drahtunterstütztes Gewebe oder Vlies können als Trägerband verwendet werden. Ein Vlies hat außerdem den Vorteil, dass die Brandschutzmanschette gleichzeitig eine Körperschallentkopplung bewirkt. Zur Verbesserung dieses Effektes kann die Brandschutzmanschette, bzw. deren Trägerband, zusätzlichen mit einer komprimierbaren Schicht, z.B. aus Moosgummi, versehen werden.

Die in den rechteckigen Streifen eingebrachten Einschnitte können in einer Längserstreckungsrichtung der Brandschutzmanschette bevorzugt zwischen 2 mm und 30 mm voneinander beabstandet sein. Ein solcher Abstand hat sich als guter Kompromiss zwischen Flexibilität und Stabilität der Laschen der Brandschutzmanschette herausgestellt.

Vorteilhaft wird die Brandschutzmanschette gemäß einem oder mehreren der zuvor genannten Merkmale als verlorene Schalung für einen Deckendurchbruch verwendet. So kann auf eine zusätzliche Schalung verzichtet werden, was einen verringerten Montageaufwand und einen Kostenvorteil bedeutet.

Gemäß einer weiteren Ausführungsform der Erfindung wird eine Deckendurchführung mit einer Öffnung, durch die sich ein Rohr in vertikaler Richtung erstreckt, angegeben. Das Rohr kann von einer Brandschutzmanschette umgeben sein. Der untere Rand der Brandschutzmanschette kann mit mehreren zurückgebogenen Laschen versehen sein, die sich an der Wandung der Öffnung abstützen. In einem Raum zwischen der Brandschutzmanschette und der Wandung der Öffnung kann ein zusätzliches Brandschutzmaterial angeordnet sein. Außerdem kann zwischen den Laschen und der Brandschutzmanschette ein Dichtmaterial angeordnet sein. Gleiche oder ähnliche Vorteile, die bereits im Hinblick auf die Brandschutzmanschette erwähnt wurden, treffen auch auf die genannte Deckendurchführung zu.

Vorteilhaft weist die Deckendurchführung eine Brandschutzmanschette auf, deren Breite größer als die vertikale Länge der Öffnung ist. So erstreckt sich die Brandschutzmanschette entlang der vollständigen Länge der Öffnung und diese ist brandschutztechnisch zuverlässig abgesichert.

Außerdem kann eine quer zur Längserstreckungsrichtung der Brandschutzmanschette gemessene Länge der Laschen größer sein als die Breite eines zwischen der Außenseite des Rohres und der Innenseite der Öffnung vorhandenen Ringspalts. Diese Dimensionierung der Laschen stellt sicher, dass sie sich beim Einführen der Brandschutzmanschette in den Ringspalt in Richtung der Brandschutzmanschette zurückbiegen und so eine Tasche entsteht, welche als verlorene Schalung verwendet werden kann.

Gemäß einer weiteren Ausführungsform wird ein Verfahren zum Anbringen einer Brandschutzmanschette in einer Deckendurchführung eines Rohres angegeben. Die Brandschutzmanschette kann um das Rohr herum und oberhalb der Decke angeordnet werden. Ein der Decke zugewandter Rand der Brandschutzmanschette kann mit mehren Laschen versehen sein. Mit anderen Worten wird die Brandschutzmanschette so um das Rohr herum angeordnet, dass ihre Laschen in Richtung des Durchbruchs zeigen, durch den das Rohr geführt ist. Vorteilhaft können die Laschen der Brandschutzmanschette quer zu einer Erstreckungsrichtung des Rohres umgebogen werden. Schließlich kann die Brandschutzmanschette in einen zwischen einer Wandung der Öffnung und einer Außenseite des Rohrs vorhandenen Ringspalt in die Decke eingeschoben werden, wodurch die Laschen der Brandschutzmanschette zurückgebogen werden. Vorteilhaft entsteht auf diese Weise eine Tasche innerhalb der Öffnung, in welche ein Dichtmaterial eingeführt werden kann. Zu diesem Zweck können übliche Hinterfüllmaterialien wie z.B. Mörtel, Gips, Brandschutzschaum oder Mineralwolle verwendet werden.

Im Folgenden wird die Erfindung unter Bezugnahme auf in den Zeichnungen gezeigte Ausführungsbeispiele näher erläutert. Dabei zeigt
- Fig. 1:: eine vereinfachte Schnittansicht eines durch einen Deckendurchbruch geführten Rohrs, welches mit einer Brandschutzmanschette gemäß einem Ausführungsbeispiel abgesichert ist,
- Fig. 2:: eine vereinfachte perspektivische Ansicht einer Brandschutzmanschette vor dem Einbringen der Einschnitte,
- Fig. 3:: eine in Draufsicht dargestellte Brandschutzmanschette gemäß einem Ausführungsbeispiel, und
- Fig. 4:: eine weitere vereinfachte Schnittansicht eines durch einen Deckendurchbruch geführten Rohrs nach Durchführung der Deckenabschottung.

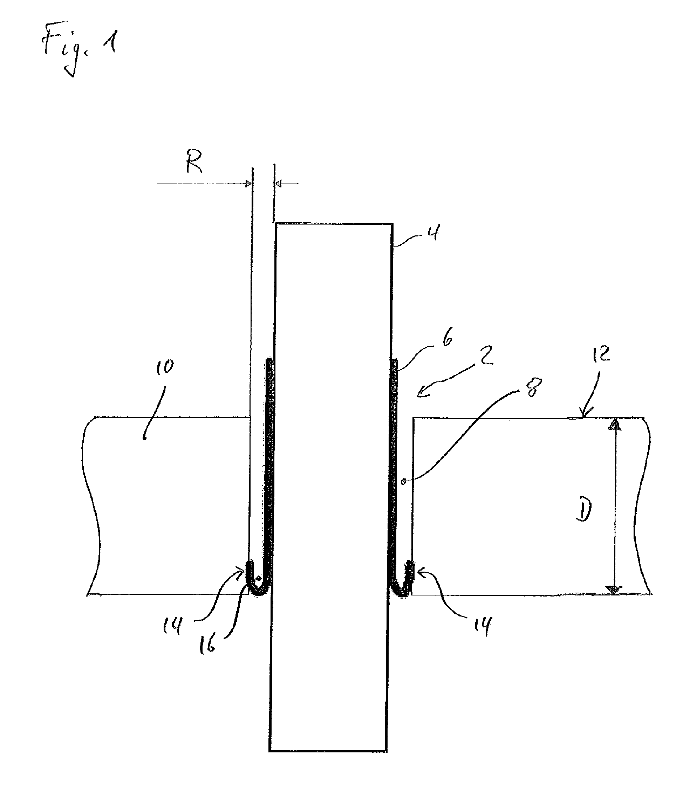

Figur 1 ist eine vereinfachte Schnittansicht, welche ein durch einen Deckendurchbruch 2 geführtes Rohr 4 zeigt. Alternativ zu dem dargestellten Rohr 4 kann ein Leitungsstrang, ein Kabelkanal oder eine andere Versorgungsstrecke, die brennbares Material verwendet, durch den Deckendurchbruch 2 geführt sein. Zur brandschutztechnischen Absicherung befindet sich eine Brandschutzmanschette 6 in einem Ringspalt 8, der sich zwischen einer Außenseite des Rohres 4 und einer Innenseite des in der Decke 10 vorhandenen Durchbruchs 2 erstreckt. Die Brandschutzmanschette 6 ist bandförmig und wird zumindest einfach um das Rohr 4 herumgelegt. Die Brandschutzmanschette 6 umfasst übliche und dem Fachmann bekannte Brandschutzadditive, z.B. unter Hitzeeinwirkung expandierbare Materialien, wie Blähgraphit, Säurebildner, wie Ammoniumpolyphosphat, Kohlenstofflieferanten, wie Zuckerpolyole (z.B. Pentaerythrit), Gasbildner (Treibmittel), wie Cyanursäurederivate, und ablative, d.h. endotherm zersetzbare Verbindungen, wie Aluminiumtrihydroxid. Um zur brandschutztechnischen Absicherung des Durchbruchs 2 ein entsprechend großes Intumeszenzvolumen zur Verfügung zu stellen, kann die Brandschutzmanschette 6 mehrfach um das Rohr 4 herumgelegt sein. Die Anzahl der Wicklungen kann auf die spezielle Anwendung abgestimmt werden, wobei der Rohrdurchmesser, das Rohrmaterial, eine radiale Ausdehnung R des Ringspalts 8, die Deckenstärke D sowie die Positionierung der Brandschutzmanschette 6 in Betracht gezogen werden können.

Die Brandschutzmanschette 6 wird von der Oberseite 12 der Decke 10 her in den Ringspalt 8 eingeführt. Dabei werden die im unteren Bereich der Brandschutzmanschette 6 vorhandenen Laschen 14 in Richtung der Brandschutzmanschette 6 umgebogen, sodass sich im unteren Teil des Ringspaltes 8 eine Tasche 16 bildet. So kann die Brandschutzmanschette 6 gleichzeitig als verlorene Schalung für ein von der Oberseite 12 der Decke 10 her in den Ringspalt 8 einzuführendes Dichtmaterial, z.B. einen fließfähigen Mörtel, verwendet werden.

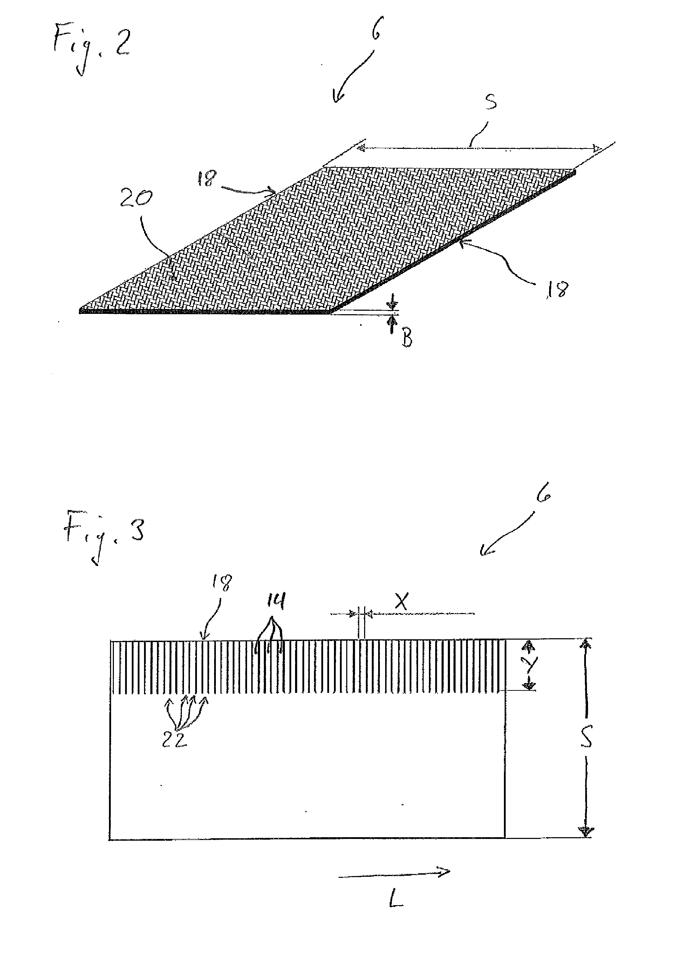

Figur 2 zeigt eine vereinfachte perspektivische Ansicht einer Brandschutzmanschette 6, bevor entlang einer ihrer Längsseiten 18 Einschnitte eingebracht wurden. Die Brandschutzmanschette 6 besteht aus einem Basismaterial, welches aus einem Matrixmaterial und darin eingebetteten Brandschutzadditiven besteht. Dieses Basismaterial kann ein Polymer wie beispielsweise Polyurethan, Acrylat, Silicon, EPDM, etc. sein. Bei den Brandschutzadditiven kann es sich um die dem Fachmann bekannten Brandschutzadditive handeln. Das Basismaterial der Brandschutzmanschette 6 ist mit einem Trägerband 20 verstärkt, welches in Figur 2 als strukturierte Oberfläche dargestellt ist. Dieses bevorzugt flexible Trägerband 20 kann aus einem Gewebe, einem drahtverstärkten Gewebe oder Vlies oder auch aus einem flexiblen Blech bestehen. Das Trägerband 20 verstärkt die Brandschutzmanschette 6, sodass sich deren Laschen 14 zuverlässig in dem Ringspalt 8 verspannen (vgl. auch Figur 1). Außerdem kann das Trägerband 20 nicht brennbar sein. Wird z.B. eine nicht brennbare Gewebelage als Trägerband 20 verwendet, so kann eine dadurch bedingt verbesserte Aschekrustenstabilität das Verhalten der Brandschutzmanschette 6 im Brandfall positiv beeinflussen.

Die Verwendung eines Trägerbandes 20 ist jedoch für eine Brandschutzmanschette 6 gemäß einem Ausführungsbeispiel keine notwendige Voraussetzung. Diese kann ausschließlich aus Basismaterial bestehen, z.B. aus einem Polymer oder einer Polymermischung mit darin eingebetteten Brandschutzadditiven. Das zur Unterstützung des Basismaterials verwendete Trägerband 20 kann - im montierten Zustand der Brandschutzmanschette 6 - sowohl rohrseitig als auch vom Rohr 4 abgewandt angeordnet sein. Eine weitere Möglichkeit besteht darin, das Trägerband 20 beidseitig mit Basismaterial zu beschichten, sodass das Trägerband 20 in dem Basismaterial eingebettet ist. Um eine problemlose Biegbarkeit der Brandschutzmanschette 6 sicherzustellen, sollte jedoch deren Gesamtstärke B 5 mm nicht überschreiten. Die Breite S der Brandschutzmanschette 6 wird bevorzugt auf die Dicke D der Decke 10 abgestimmt, in welcher sich der Durchbruch 2 befindet. So kann das Rohr 4 entlang der vollständigen Länge des Durchbruchs 2 abgesichert werden. Die Breite S ist außerdem so groß zu wählen, dass zusätzlich ausreichend lange Laschen 14 zur Ausbildung der Tasche 16 vorhanden sind (vgl. auch Figur 1).

Um das gewünschte Intumeszenzvolumen zu erreichen, sollte die Brandschutzmanschette 6 jedoch überwiegend aus Basismaterial bestehen und das Trägerband 20 sollte lediglich eine untergeordnete Rolle spielen. In empirischen Untersuchungen hat sich herausgestellt, dass es vorteilhaft ist, wenn das Basismaterial zumindest 30 %, bevorzugt 75 % der Brandschutzmanschette 6 einnimmt.

Figur 3 zeigt eine Brandschutzmanschette 6 gemäß einem weiteren Ausführungsbeispiel. Bei dieser Brandschutzmanschette 6 sind bereits Einschnitte 22 in eine Längsseite 18 eingebracht. Die Einschnitte 22 sind in einer Längserstreckungsrichtung L der Brandschutzmanschette 6 um einen Schnittabstand X voneinander beabstandet. Bevorzugt liegt der Schnittabstand X zwischen 2 mm und 30 mm. Er bestimmt die Breite der zwischen den Einschnitten 22 entstehenden Laschen 14. Der genannte Schnittabstand X hat sich als guter Kompromiss herausgestellt, um sowohl stabile als auch flexible Laschen 14 zu erhalten. Während die Breite S der Brandschutzmanschette 6 durch die Dicke D der Decke 10 bestimmt ist, ist eine Einschnitttiefe Y durch die radiale Breite R des Ringspalts 8 bestimmt. Die Einschnitttiefe Y wird vorzugsweise größer gewählt als die radiale Breite R des Ringspalts 8, sodass sich durch Umbiegen der Laschen 14 die gewünschten Taschen 16 am unteren Ende des Durchbruchs ergeben (vgl. auch Figur 1).

Je nach Einsatzgebiet haben sich folgenden Dimensionierungen der Brandschutzmanschette 6 als vorteilhaft herausgestellt:

| Rohrtyp | Rohrdurchmesser | Ringspalt R | Bandbreite S | Banddicke B | Intumeszenzvolumen unter Last | Wicklungen |
|---|---|---|---|---|---|---|
| | bis max [mm] | bis max [mm] | [mm] | [mm] | x-fach | Anzahl |
| Metallrohre | 400 | 100 | 300 | 2 | 10 | >2 |
| Kunststoffrohre | 160 | 50 | 250 | 4 | 10 | 2-4 |

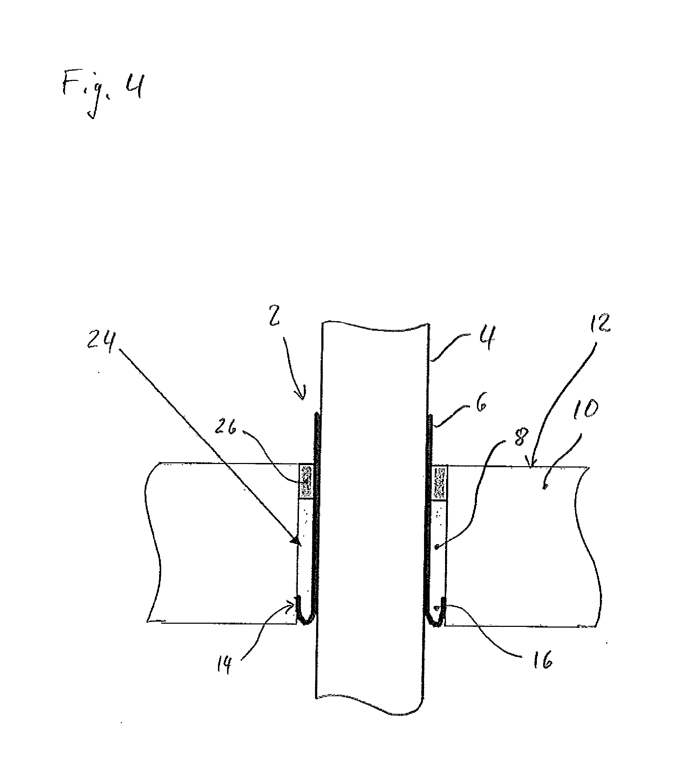

Figur 4 zeigt eine weitere vereinfachte Schnittansicht eines Rohres 4, welches mithilfe einer Brandschutzmanschette 6 abgesichert ist und durch einen in einer Decke 10 vorhandenen Durchbruch 2 geführt ist. Die Laschen 14 der Brandschutzmanschette 6 haben sich in dem Durchbruch 2 verspreizt und bilden eine Tasche 16 aus. Zur Abschottung des Durchbruchs 2 wird in den Ringspalt 8 ein Hinterfüllmaterial 24 eingefüllt, bei dem gezeigten Ausführungsbeispiel handelt es sich um Mineralwolle. Im Bereich der Oberfläche 12 der Decke 10 ist der Durchbruch 2 außerdem mit einer Dichtmasse 26 versiegelt. Bei dieser kann es sich bevorzugt um eine selbstnivellierende Dichtmasse wie fließfähigen Mörtel oder Gips handeln.

Um eine Körperschalldämmung zwischen dem Rohr 4 und der Decke 10 herzustellen, kann die Brandschutzmanschette 6 auf zumindest einer ihrer beiden Flachseiten zusätzliche mit einer komprimierbaren Schicht, z.B. aus Moosgummi, versehen sein. Aus Gründen der einfachen Herstellbarkeit ist es vorteilhaft, das Trägerband 20 der Brandschutzmanschette 6 mit einer solchen komprimierbaren Schicht auf derjenigen Flachseite zu versehen, welche dem Basismaterial abgewandt ist.

Die Brandschutzmanschette 6 gemäß den vorgenannten Ausführungsbeispielen erlaubt eine einfache Installation von der Oberseite 12 der Decke 10 her. So kann eine schnelle und kostengünstige Installation durchgeführt werden. Durch die Kombination aus verlorener Schalung und Brandschutzmanschette 6 kann auf eine zusätzliche Schalung verzichtet werden, was eine sehr wirtschaftliche Installation erlaubt. Aufgrund der konzentrierten Positionierung der in der Brandschutzmanschette 6 enthaltenen Brandschutzadditive kann eine zuverlässige und sichere Abschottung insbesondere an der Unterseite des Durchbruchs 2 gewährleistet werden. Die Brandschutzmanschette 6 gemäß den genannten Merkmalen kann als endloses Rollenmaterial zur Verfügung gestellt und daher flexibel für verschiedene Rohre 4 unterschiedlichen Durchmessers eingesetzt werden. Außerdem ist die Isolierung der feuerabgewandten Seite bei ausreichender Rollenbreite S der Brandschutzmanschette 6 für Metallrohre oder Rohrleiterkabel in einem Arbeitsgang möglich.

### Bezugszeichenliste

- 2: Deckendurchbruch
- 4: Rohr
- 6: Brandschutzmanschette
- 8: Ringspalt
- 10: Decke
- 12: Oberseite
- 14: Lasche
- 16: Tasche
- 18: Längsseite
- R: radiale Breite
- D: Dicke
- 20: Trägerband
- 22: Einschnitte
- 24: Dichtmasse
- 26: weitere Dichtmasse
- B: Gesamtstärke
- S: Breite
- L: Längserstreckungsrichtung
- X: Schnittabstand
- Y: Einschnitttiefe

## Patentansprüche

1. Brandschutzmanschette, die Brandschutzadditive umfasst und als rechteckiger Streifen ausgeführt ist, der entlang nur einer Längsseite mit einer Vielzahl von Einschnitten versehen ist, sodass benachbarte Laschen gebildet sind.

2. Brandschutzmanschette nach Anspruch 1, ein Trägerband umfassend.

3. Brandschutzmanschette nach Anspruch 1 oder 2, die zumindest teilweise aus einem Basismaterial besteht, welches ein Matrixmaterial und darin eingebettete Brandschutzadditive umfasst.

4. Brandschutzmanschette nach Anspruch 3, bei der das Basismaterial einen Anteil von 10 bis 90 Gew.-% an Brandschutzadditiven, bezogen auf das Basismaterial, enthält.

5. Brandschutzmanschette nach Anspruch 3 oder 4, bei der der Anteil des Basismaterials an der Brandschutzmanschette mindestens 30 % beträgt.

6. Brandschutzmanschette nach einem der Ansprüche 3 bis 5, bei der das Trägerband mit Basismaterial beschichtet ist.

7. Brandschutzmanschette nach einem der Ansprüche 2 bis 6, bei der das Trägerband aus einem flexiblen Material besteht.

8. Brandschutzmanschette nach Anspruch 7, bei der das Trägerband aus Gewebe und/oder aus Blech besteht.

9. Brandschutzmanschette nach einem der vorhergehenden Ansprüche, bei der die Einschnitte in einer Längserstreckungsrichtung der Brandschutzmanschette zwischen 2 mm und 30 mm voneinander beabstandet sind.

10. Verwendung einer Brandschutzmanschette nach einem der vorhergehenden Ansprüche als verlorene Schalung für einen Deckendurchbruch.

11. Deckendurchführung mit einer Öffnung, durch die sich ein Rohr in vertikaler Richtung erstreckt, wobei das Rohr von einer Brandschutzmanschette nach einem der Ansprüche 1 bis 9 umgeben ist und deren unterer Rand mit mehreren zurückgebogenen Laschen versehen ist, die sich an der Wandung der Öffnung abstützen

12. Deckendurchführung nach Anspruch 11, bei der zwischen der Brandschutzmanschette und der Wandung der Öffnung weiteres Brandschutzmaterial angeordnet ist.

13. Deckendurchführung nach Anspruch 11 oder 12, bei der zwischen der Brandschutzmanschette und der Wandung der Öffnung ein Dichtmaterial angeordnet ist.

14. Deckendurchführung Anspruch 11 bis 13, bei der die Brandschutzmanschette eine Breite aufweist, welche größer als die vertikale Länge der Öffnung ist.

15. Deckendurchführung nach einem der Ansprüche 11 bis 14, bei der die Laschen der Brandschutzmanschette eine quer zu deren Längserstreckungsrichtung gemessene Länge haben, die größer ist als die Breite eines zwischen der Außenseite des Rohres und der Innenseite der Öffnung vorhandenen Ringspalts.

16. Verfahren zum Anbringen einer Brandschutzmanschette in einer Deckendurchführung eines Rohres, bei dem die Brandschutzmanschette um das Rohr herum und oberhalb der Decke angeordnet wird, wobei ein der Decke zugewandter Rand der Brandschutzmanschette mit mehren Laschen versehen ist.

17. Verfahren nach Anspruch 16, bei dem die Brandschutzmanschette in einen zwischen einer Wandung der Öffnung und einer Außenseite des Rohrs vorhandenen Ringspalt in der Decke eingeschoben wird, wodurch die Laschen auf die Brandschutzmanschette zurückgebogen werden.

18. Verfahren nach Anspruch 16 oder 17, bei dem in den Raum zwischen der Brandschutzmanschette und der Wandung der Öffnung ein Dichtmaterial eingefüllt wird.
